# EUROPÄISCHE PATENTSCHRIFT

(11) **EP 0 760 740 B1**
(45) Veröffentlichungstag und Bekanntmachung des Hinweises auf die Patenterteilung: **20.10.1999**
(21) Anmeldenummer: 96914105.0
(22) Anmeldetag: 23.04.1996
(51) Int. Cl.: B29C 55/16, D06C 3/02

(54) **TRANSPORTVORRICHTUNG SOWIE ZUGEHÖRIGE FÜHRUNGSSCHIENE**
TRANSPORT DEVICE AND ASSOCIATED GUIDING RAIL
DISPOSITIF DE TRANSPORT ET RAIL DE GUIDAGE ASSOCIE

(30) Priorität: 24.04.1995 DE 19515036
(43) Veröffentlichungstag der Anmeldung: 12.03.1997
(73) Patentinhaber: Brückner Maschinenbau GmbH, 83313 Siegsdorf (DE)
(72) Erfinder: Lindner, Paul, 5302 Henndorf (AT); Rühlemann, Ulrich, 83355 Grabenstätt (DE)
(74) Vertreter: Flach, Dieter Dipl.-Phys.
(86) Internationale Anmeldenummer: EP9601696
(87) Internationale Veröffentlichungsnummer: WO9633858

(56) Entgegenhaltungen:
- DE-A- 2 360 335
- FR-A- 1 561 311
- GB-A- 1 136 709
- US-A- 4 080 692
- US-A- 5 072 493

## Beschreibung

Die Erfindung betrifft eine Transportvorrichtung, insbesondere für eine bewegte Materialbahn, vorzugsweise eine Reckanlage nach dem Oberbegriff des Anspruches 1 sowie eine zugehörige Führungsschiene.

Insbesondere bei der Kunststoffolienherstellung sind sowohl Quer-, Längs- als auch Simultanreckanlagen bekannt. Bei den zuletzt genannten Simultanreckanlagen wird die Kunststoffolienbahn gleichzeitig in Längs- und Querrichtung gereckt. Die Materialbahn wird dabei an den gegenüberliegenden Außenrändern über eine Vielzahl von sogenannten Kluppen oder Kluppenkörpern erfaßt, die längs zweier seitlich der Materialbahn vorgesehener Schienenanordnungen umlaufend verfahrbar sind, worüber die Kunststoffolienbahn gereckt wird.

Eine Vorrichtung zum simultan biaxialen Strecken einer bewegten Materialbahn ist beispielsweise aus der DE-C2-37 41 582 bekannt geworden. Eine Vorrichtung zum Breitstrekken sowie Fixieren von Folienbahnen ist demgegenüber beispielsweise aus der WO 91/12952 bekannt.

Bei derartigen Transportvorrichtungen wird eine Schienenanordnung mit zumindest einer Führungsschiene verwendet, an der die einzelnen Kluppen oder Kluppenwagen in der Regel über mehrere Laufrollen so geführt sind, daß die einzelnen Kluppenwagen nicht von der einen oder den mehreren Führungsschienen abheben können. Mit anderen Worten werden die einzelnen Kluppen oder Kluppenwagen allseitig oder zumindest dreiseitig auf zumindest einer Führungsschiene durch die am Kluppenkörper gelagerten Laufrollen gesichert geführt. Alternativ zur Verwendung von Laufrollen ist es grundsätzlich auch aus der DE-A1-33 33 938 bekannt, eine Kluppenkette beispielsweise über drei versetzt zueinander liegende und ortsfeste Gleitführung abzustützen.

Die jeweils mit gegensinniger Komponente ausgerichteten, d.h. an gegenüberliegenden Seiten der Führungsschienen ausgebildeten Führungsflächen entsprechen im wesentlichen dem lichten Abstand der darauf verfahrbaren Laufrollen oder Gleitstücken. Allerdings muß berücksichtigt werden, daß zwischen den nachfolgend auch allgemein als Führungselemente bezeichneten Laufrollen oder Gleitstücken und den damit zusammenwirkenden Lauf- oder Gleitflächen der Schienen stets ein ausreichendes Spiel vorhanden ist. Denn nur hierdurch werden Fertigungstoleranzen sowie unvermeidliche Geometrieänderungen in Kurvenstücken ohne Verspannen der Führungselemente aufgenommen.

Während eines Kluppenumlaufes treten naturbedingt wechselnde äußere Lasten (dynamische Kräfte, Folienkräfte in Längs- und Querrichtung, Vortriebskräfte etc.) auf, die abwechselnd die verschiedenen Führungselemente (also beispielsweise Laufrollen oder Gleitstücke) an die Führungsschiene anpressen. Vor allem die dynamischen Kräfte wachsen mit der immer größer werdenden Anlagegeschwindigkeit.

Bei höheren Geschwindigkeiten, beispielsweise ab 200 m/min, erleiden die Führungselemente, insbesondere die Laufrollen, eine hohe Schlagbeanspruchung, da sie selbst bei geringstem Spiel stets abwechselnd in Kontakt mit den Laufflachen an den Schienen treten bzw. davon abheben. Momentan unbelastete Laufrollen kommen zum Stillstand und werden beim Umsetzen, also beim erneuten Inkontakttreten mit der zugehörigen Lauffläche in extrem kurzer Zeit hoch beschleunigt. Durch dieses Wechselspiel und die dadurch bedingte Schlagbeanspruchung wird die Lebensdauer der Führungselemente, d.h. insbesondere der Laufrollen, stark vermindert. Gleichzeitig unterliegen die Führungsschienen an diesen Stellen einem erheblichen Verschleiß.

Aufgrund dieser Tatsachen wird stets versucht das notgedrungen erforderliche Spiel zwischen Führungselementen und Schienenführungsabschnitten möglichst gering zu halten. Dabei ist aber ferner zu beachten, daß jederzeit Partikel, z.B. Folienstückchen (insbesondere bei einem Riß der Kunststoffolienbahn), in dieses Führungsschienensystem ein-dringen können, also zwangsläufig überfahren werden müssen. Bei zunehmend geringerem Spiel aber können sich zwischen dem Schienenführungsabschnitt und den daran längs verfahrbaren Führungselementen starke Spreizkräfte aufbauen. Dies kann im Extremfall bis zum Blockieren des Transportsystems und zu Schäden an den Bauteilen führen.

Aufgabe der vorliegenden Erfindung ist es von daher, ein demgegenüber verbessertes System zu schaffen, um die Beanspruchung des Führungsschienensystems einschließlich der Führungselemente zu verringern und damit die Funktionstüchtigkeit und Lebensdauer der gesamten Anlage zu erhöhen.

Die Aufgabe wird erfindungsgemäß entsprechend den im Anspruch 1 angegebenen Merkmalen bezüglich einer Führungsschiene und entsprechend Anspruch 15 bezüglich einer Transportvorrichtung mit entsprechender Führungsschiene gelöst. Vorteilhafte Ausgestaltungen der Erfindung sind in den Unteransprüchen angegeben.

Erfindungsgemäß ist nunmehr vorgesehen, daß eine Schienenanordnung mit zumindest einer Schiene verwendet wird, deren zumindest beide mit entgegengesetzter Komponente ausgerichteten Lauf- oder Gleitflächen in ihrem Abstand zueinandern zumindest geringfügig relativ veränderbar sind. Bevorzugt sind diese beiden Lauf- oder Gleitflächen (nachfolgend auch Schienenführungsflächen genannt) durch eine Vorspann-, Feder- und/oder Dämpfungseinrichtung so vorgespannt, gefedert und/oder gedämpft, daß die darauf längs verfahrbaren Führungselemente der Kluppe oder des Kluppenwagens in kontinuierlichem Kontakt mit den damit zusammenwirkenden Schienenführungsflächen gehalten werden.

Damit die Führungselemente ständig mit zumindest leichtem Druck an der Schiene, d.h. an den Schienenführungsflächen, anliegen, umfaßt die Schienenanordnung an wenigstens einer Schienenseite ein beweglich gelagertes Schienenführungselement. Durch die bevorzugt vorgesehenen Vorspannelemente wird dieses Schienenführungselement stets auf das oder die damit zusammenwirkenden Führungselemente des Kluppenwagens zumindest geringfügig vorgespannt gehalten. Durch die Reaktionskräfte zwischen den Vorspannelementen und dem jeweiligen Führungsschienenelement werden aber auch die z.B. an der gegenüberliegenden Seite der Führungsschiene vorgesehenen Laufrollen zum Anliegen gebracht und damit in Bewegung gehalten. Die eingangs geschilderten Nachteile des sogenannten Umsetzens, bei welchem beispielsweise momentan unbelastete Laufrollen zum Stillstand kommen und beim Umsetzen in einer extrem kurzen Zeit wieder hoch beschleunigt werden, werden zusammen mit den dadurch bedingten Nachteilen sicher vermieden.

Durch die erfindungsgemäße Lösung werden mehrere Vorteile erzielt:
- Durch die erfindungsgemäße Adaptionsmöglichkeit einer vorgespannten Führungsschiene für einen spielfreien Kontakt der Führungselemente lassen sich problemlos Fertigungstoleranzen zwischen den an den Kluppen gehaltenen Führungselementen und den oder der Schiene ausgleichen.
- Darüber hinaus wird ein permanenter Kontakt zwischen den Laufrollen oder Gleitstücken des Kluppenwagens und den Lauf- oder Gleitflächen der Schiene gewährleistet. Die Laufrollen werden dabei beispielsweise mit definierter Kraft ständig mit der von der Verfahrgeschwindigkeit des Kluppenwagens abhängigen Umfangsgeschwindigkeit gedreht.
- Schließlich wird auch eine Dämpfungswirkung erzielt, so daß dynamische Stöße, Schläge, Beschleunigungen oder Vibrationen vermindert oder vermieden werden. Bei Verwendung lediglich von Dämpfungseinrichtungen (ohne Vorspanneinrichtungen) lassen sich aber auch bereits wesentliche Vorteile gegenüber herkömmlichen Lösungen realisieren.
- Bei Überlast, beispielsweise beim Überfahren von Fremdkörpern, wird ein problemloses Einfedern und Ausweichen der vorgespannten Führungsschienenelemente gewährleistet.
- Dabei ist ferner eine gezielte auf die jeweilige Belastung einstellbare Vorspannung der Schiene bzw. der entsprechend vorgespannten Schienenelemente möglich.

Zwar ist aus der WO 91/12952 grundsätzlich eine Lösung bekannt, um einen ständigen Kontakt der Laufrollen mit den entsprechenden Laufschienenflächen herzustellen. Dabei ist jedoch vorgesehen, daß zumindest eine Laufrolle pro Kluppe durch die Zugkräfte quer zur Lauffläche der Schiene geringfügig anpaßbar verstellbar ist. Dieses Prinzip ist nicht nur völlig andersartig zur vorliegenden Erfindung, sondern vor allem auch nur bei sogenannten BreitreckKunststoffolienanlagen möglich, da hier die einzelnen Kluppenwagen nach Art einer Kluppenkette fest miteinander verspannt sind. Bei Simultan-Transportsystemen mit Scherenketten oder aber auch freigetriebenen Einzelkluppen (beispielsweise durch Spindeln oder Linearmotoren, wie dies grundsätzlich unter anderem auch aus der US-A1-5 072 493 bekannt ist) kann dieses Prinzip naturgemäß nicht zur Anwendung kommen.

Aus der DE-B2-19 25 284 ist ferner eine Kluppenkette für Spannkluppen in Spannrahmen bekannt. Bei einer derartigen Kluppenkette (die naturbedingt beispielsweise nur für eine Breitreck- und nicht für eine Längs- oder Simultanreckanlage geeignet ist) werden die einzelnen Spannkluppen jeweils über eine obenliegende, um eine Horizontalachse drehende Laufrolle an einer Führungsschiene abgestützt. Da allerdings bei hohen Laufgeschwindigkeiten der Kluppenkette ein vertikales Springen der das Kluppen- und Kettengewicht tragenden Laufrollen auftreten kann, ist vorgesehen, daß in Abständen einzelne dieser Laufrollen höher gelagert sind und sich an einer darüber befindlichen zweiten Schiene abstützen. Diese zweite Schiene ist dabei federnd gelagert. Auch hier handelt es sich nur um einen ganz spezifischen Anwendungsfall einer Kluppenkette. Diese Kluppenkörper sind dann über keine eigene Laufrolle an der Führungsschiene abgestützt, wodurch Instabilitäten auftreten können.

Schließlich ist aus der DE-A1-25 36 407 eine Überbrückungseinrichtung für den Spalt bei Führungsschienen einer Vorrichtung zum seitlichen Strecken bahnförmigen Materials bekannt geworden, woraus zu entnehmen ist, daß zwei Laufrollen auf einem gemeinsamen Achszapfen axial versetztliegend drehen. Während die eine Laufrolle auf einer ihr zugeordneten Führungsfläche einer Führungsschiene anliegt und abrollt, ist die axial dazu versetzt liegende zweite Laufrolle an einer zur ersten Führungsschiene gegenüberliegenden Führungsfläche einer zweiten Führungsschiene abgestützt, die im Querschnitt L-förmig ausgebildet und die federnd gelagert ist. Auch hier handelt es sich um eine spezielle Lösung, bei der eine Doppelrolle an zwei gegenüberliegenden Führungsflächen zweier getrennter Führungsschienen abgestützt ist (also nicht an einer einzigen auch als "Mono-Rail" bezeichneten Führungsschiene). Diese Lösung weist aber den weiteren Nachteil auf, daß durch die in Axialrichtung versetzt und gegenüberliegende Abstützung der beiden Laufrollen an den beiden unterschiedlichen Führungsschienen zudem eine höchst unerwünschte unsymmetrische Krafteinleitung auf den Kluppenwagen erfolgt. Durch diese unsymmetrische Krafteinleitung werden unerwünschte Momente erzeugt, die zu zusätzlichen Belastungen der Führungselemente führen.

Demgegenüber ist bevorzugt vorgesehen, daß - auch wenn mehrere Führungsschienen vorgesehen sein sollten - ein entsprechender Wagen, insbesondere Kluppenwagen, an einer einzigen Führungsschiene, nämlich an der sog. Mono-Rail, diese übergreifend abgestützt ist. Dadurch entstehen auch keine, wie beim zuletzt genannten Stand der Technik, unerwünschten unsymmetrischen Krafteinleitungen und Kippmomente. Dabei ist die erfindungsgemäße Vorspann-, Feder- und/oder Dämpfungseinrichtung an dieser (auch als MonoRail zu bezeichnenden) Führungsschiene ausgebildet. Durch diese Anordnung wird insbesondere auch im Gegensatz zur zuletzt genannten Vorveröffentlichung vor allem eine Transportvorrichtung für hohe und höchste Transportgeschwindigkeiten geschaffen. Die erfindungsgemäße Ausbildung der in der Regel einen rechteckförmigen Querschnitt aufweisenden alleinigen Führungsschiene ermöglicht es auch, daß diese sog. Mono-Rails beispielsweise aus langen Metallbändern zusammengesetzt werden können, die biegsam sind und die somit eine stoßfreie Schiene auch an den beweglichen Gelenkstellen ermöglicht. Die dabei auftretenden, zumindest geringfügigen Dickeschwankungen der gegenüberliegenden Laufflächen an einer derartigen einzigen vom Wagen über- oder umgriffenen Führungsschiene können durch die an dieser Schiene ausgebildeten Vorspann- und Dämpfungseinrichtungen kompensiert werden. Dadurch zeigt die Erfindung auch eine Möglichkeit auf, wie zudem bei geringem Platzangebot in einer derartigen Mono-Rail ein federndes System integriert werden kann.

In einer besonders bevorzugten Ausführungsform der Erfindung ist lediglich eine von beispielsweise zwei gegenüberliegenden Schienenführungsflächen mittels der erfindungsgemäß vorgesehenen Vorspann-, Feder- und/oder Dämpfungseinrichtung gering beweglich angeordnet. Die andere Laufschiene ist gegenüber dem eigentlichen Schienenkörper oder Schienenträger fest angeordnet. In einer Weiterbildung der Erfindung können aber auch jeweils beide oder mehrere gegensinnig ausgerichtete Schienenführungsabschnitte zumindest geringfügig verstellbar und an das Abstandsmaß der am Kluppenkörper vorgesehenen Führungselemente anpaßbar sein.

Als Vorspann-, Feder- und/oder Dämpfungseinrichtungen können unterschiedlicher Konstruktionsprinzipien zur Anwendung ge-langen. Geeignet sind beispielsweise Federn in jedweder Art, beispielsweise Blattfedern, Schraubenfedern, Tellerfedern, Biegeschenkelfedern, Torsionsfedern, Wellfedern etc.. Dabei können auch mehrfach zusammengesetzte Federeinrichtungen eingesetzt werden.

Die erwähnten Dämpfungseinrichtungen können zusätzlich vorgesehen sein. Bevorzugt können auch kombinierte FederDämpfungselemente verwendet werden, die nicht nur eine Selbsteinstellung der Kontaktflächen an den Schienen zu den Führungselementen an den Kluppenwagen herstellen, sondern zudem auch eine zusätzliche Dämpfung bewirken. Als Dämpfer-Elemente kommen beispielsweise Elastomerfedern oder -dämpfer, Gasdruckfedern oder -dämpfer, hydraulische Feder- oder Dämpfer-Systeme in Betracht. Schließlich erweist es sich als günstig den Adaptionsbereich der zumindest einen Kontaktfläche, d.h. zumindest eines selbsttätig einstellbaren Schienenführungselementes, durch innere und äußere Anschläge zu begrenzen.

In einer besonders bevorzugten Ausführungsform der Erfindung sind die lageveränderlichen Schienenführungsflächen bzw. die vorgespannt und/oder gedämpft gehaltenen Schienenführungselemente an einer sogenannten Mono-Rail, also an einer Einzel-Schiene vorgesehen. Dabei können die entsprechenden Einrichtungen nicht nur in Vertikal-, sondern auch in Horizontalrichtung eingesetzt werden, in welcher beispielsweise die Folien-Zugkräfte wirken. Schließlich können die einzelnen vorgespannt gehaltenen Schienenführungselemente jeweils gleichzeitig zur Abstützung einer beispielsweise um eine horizontale wie eine vertikale Achse drehende Laufrolle dienen.

Die Erfindung wird nachfolgend anhand von Zeichnungen für verschiendene Ausführungsbeispiele erläutert. Dabei zeigen im einzelnen:
- Figur 1 :: eine schematische auszugsweise perspektivische Darstellung eines längs einer erfindungsgemäßen Führungsschiene verfahrbaren Kluppenwagens;
- Figur 2 :: eine schematische auszugsweise Querschnittdarstellung durch eine erfindungsgemäße Führungsschiene;
- Figur 3 :: eine vereinfachte Ausführungsform, in welcher nur eine quer zur Folienebene verlaufende Lauffläche gefedert und/oder gedämpft ist;
- Figur 4 :: eine auszugsweise Seitendarstellung der erfindungsgemäßen Führungsschiene mit darauf verfahrbarem Kluppenwagen;
- Figur 5 :: eine Schnittdarstellung längs der Linie V - V in Figur 4;
- Figur 6 :: eine Querschnittdarstellung längs der Linie VI - VI in Figur 4;
- Figur 7 :: ein weiteres abgewandeltes Ausführungsbeispiel in schematischer Querschnittsdarstellung quer zur Längsrichtung der Führungsschiene;
- Figur 8 :: eine schematische Darstellung einer Ausführungsform einer Vorspann- und/oder Dämpfungseinrichtung;
- Figur 9 :: eine schematische zu Figur 8 abgewandelte Ausführungsform; und
- Figur 10 :: eine schematische Darstellung einer nochmals abgewandelten Vorspann- und Dämpfungseinrichtung für eine Führungsschiene mit veränderlichem Laufflächenabstand.

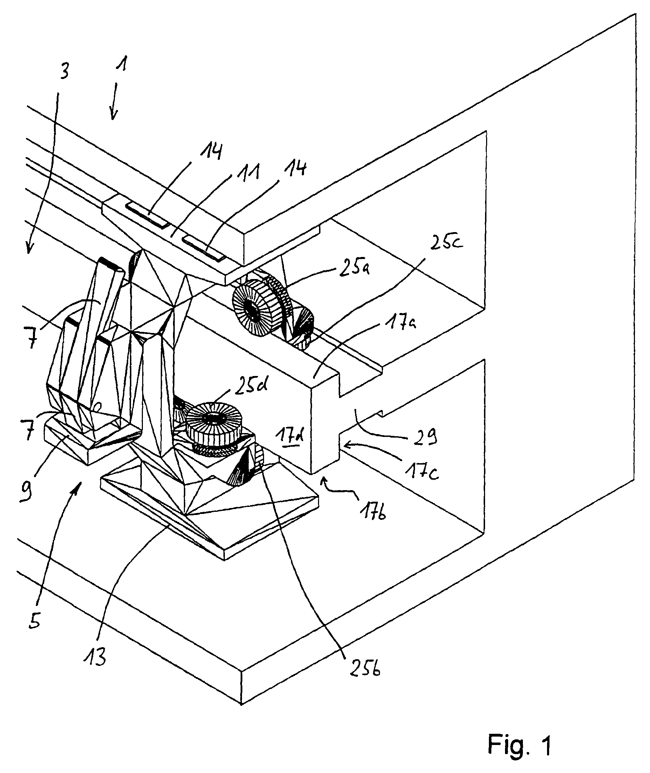

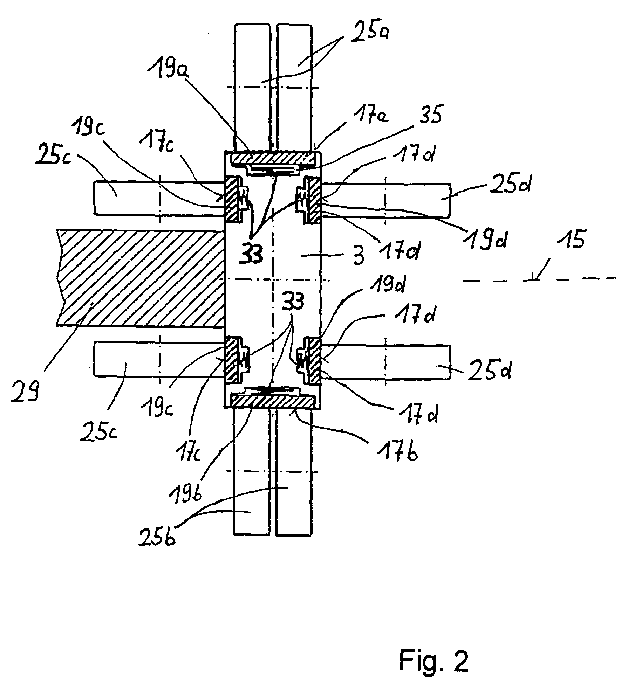

In Figur 1 ist eine Führungsschienenanordnung 1 mit einer im Querschnitt rechteckförmigen Führungsschiene 3 ausschnittsweise dargestellt, längs welcher Kluppen oder Kluppenwagen 5 verfahrbar sind. Es handelt sich dabei um eine sog. auch als "Mono-Rail" bezeichnete Einzelschiene, auf welcher der Wagen diese Einzelschiene über- oder umgreifend abgestützt und verfahrbar ist. Die entsprechenden Schienenführungsflächen weisen also bei einer derartigen, in Figur 1 und 2 gezeigten Mono-Rail nach außen. Die Querschnittsanordnung der Führungsschiene gemäß Figur 1 und 2 ist dabei im wesentlichen rechteckförmig, wobei die Führungsschiene selbst aus mehreren geschichteten Bändern zusammengesetzt sein kann, die zudem biegsam sein können, um somit eine stoßfreie Schiene auch bei Schienenübergängen bei beweglichen Gelenken einsetzen zu können.

Im Falle einer Reckanlage ist bekanntermaßen links und rechts der Materialbahn eine derartige Führungsschiene 3 vorgesehen, die Teil einer umlaufend geschlossenen Führungsschienenbahn ist, längs welcher die Kluppenwagen 5 umlaufen. Zwischen einem verschwenkbaren Kluppenhebel 7 und einem Kluppentisch 9 wird dabei bekanntermaßen der Rand der zu reckenden Folienbahn ergriffen und vorwärtsbewegt, wobei die Führungsschienenorndung 1 auf beiden Seiten der bewegten Materialbahn symmetrisch zueinander angeordnet ist.

Der Antrieb der Kluppenwagen 5 kann beispielsweise mittels Linearmotoren erfolgen, wie dies grundsätzlich für den Fall einer Simultanreckanlage aus der US 5,072,493 bekannt ist, auf deren Offenbarungsgehalt insoweit Bezug genommen wird. An der Kluppenober- und Kluppenunterseite 11 bzw. 13 sind dazu mit unterschiedlicher vertikaler Polausrichtung Magnete 14 vorgesehen, die mit oben und unten benachbart liegenden, in Figur 1 nicht im Detail eingezeichneten Linearmotoren zusammenwirken.

Wie aus Figur 2 ersichtlich ist, umfaßt die Führungsschiene 3, bezogen auf eine in der Regel horizontal ausgerichtet liegende Materialbahn-Ebene 15, obere und untere einmal materialbandseitig und einmal dazu gegenüberliegend vorgesehene Laufflächen, die nachfolgend auch allgemein als Schienenführungsflächen bezeichnet werden.

Im gezeigten Ausführungsbeispiel laufen auf den obenliegenden horizontal ausgerichteten Schienenführungsflächen 17a obenliegende in Längsrichtung der Führungsschiene 3 versetzt liegende Laufrollen 25a und dazu gegenüberliegend auf der nach unten weisenden Führungsfläche 17b ebenfalls entsprechend am Kluppenwagen in Längsrichtung versetzt liegende Laufrollen 25b ab. Die entsprechenden Achslinien bezüglich der Laufrollen sind in Figur 2 lediglich strichpunktiert angedeutet. Der in Figur 1 wiedergegebene Kluppenkörper ist zur besseren Darstellbarkeit in Figur 2 nicht wiedergegeben.

In Längsrichtung der Führungsschiene 3 versetzt liegend ist beispielsweise ein durchgängiger Schienenträger 29 vorgesehen, an welchen die Führungsschiene 3 beispielsweise mittels nicht näher dargestellten Schrauben befestigt sein kann.

Oberhalb und unterhalb dieser Schienenträger 29 sind jeweils auf der zur Materialbahn abliegenden Seite vertikal ausgerichtete Laufflächen 17c, d.h. also Schienenführungsflächen 17c und gegenüberliegend, also materialbahnseitig, weitere Laufflächen 17d, also sogenannte Schienenführungsflächen 17d an der Führungsschiene 3 ausgebildet, auf welchen Laufrollen 25c bzw. 25d abrollen, die ebenfalls am Kluppenwagen 5 gelagert sind.

Der Abstand zwischen den jeweils gegenüberliegenden Laufrollen, also den oberen und unteren Laufrollen 25a und 25b sowie der links und rechts liegenden Laufrollen 25c bzw. 25d, ist jeweils auf den Vertikal- bzw. den Horizontalabstand zwischen den Schienenführungsflächen 17a und 17b bzw. 17c und 17d abgestimmt.

Damit ein ständiger Laufrollenkontakt zur zugeordneten Lauffläche sichergestellt werden kann, ist bei dem Ausführungsbeispiel gemäß Figur 1 und 2 vorgesehen, daß die Laufflächen, (d.h. also die Schienenführungsflächen 17a bis 17d, die auf der nach außen weisenden Seite von separaten Schienenführungselementen 19a bis 19d gebildet sind), jeweils mittels einer Vorspann- und/oder Dämpfungseinrichtung 31 in Richtung auf die zugeordneten Laufrollen 25a bis 25d zumindest geringfügig vorgespannt gehalten sind.

Dafür vorgesehene Federeinrichtungen 33 sind in Figur 2 schematisch angedeutet. Sie sind schienenkörperseitig in Aufnahmevertiefungen 35 liegend abgestützt und drücken selbsttätig die Schienenführungsflächen 17a bis 17d in Richtung auf die Laufrollen 15a bis 15d.

Üblicherweise ist die Anordnung derart, daß die zumindest geringfügig verstellbaren und vorgespannten Schienenführungsflächenelemente anschlagsbegrenzt zwischen einer maximalen Verstellbewegung in Richtung der Federkraft der Vorspanneinrichtung 31 (also außenseitig) wie aber auch in umgekehrter Richtung entgegen der Kraft der Vorspanneinrichtung 31 (also innenseitig) anschlagsbegrenzt beweglich sind. Der Verstellbereich muß nur so groß sein, daß zur Überwindung von Toleranzfehlern das üblicherweise notwendig vorgesehene Spiel zwischen Laufrollen und Führungsschienen stets ausgeglichen werden kann.

Bei dem Ausführungsbeispiel gemäß den Figuren 1 bis 2 ist für jede Spur eine separate angefederte Rollschiene, also ein angefedertes Schienenführungselement vorgesehen. Es können aber auch mehrere Rollschienen zu einer Funktionseinheit zusammengefaßt werden.

In vielen Einsatzfällen werden die Kluppenwagen unter anderem aufgrund des Eigengewichtes primär über die obenliegenden Laufrollen 25a abgestützt, so daß hier nicht zwingend notwendig eine entsprechende Vorspann- und/oder Dämpfungseinrichtung 31 vorgesehen sein muß.

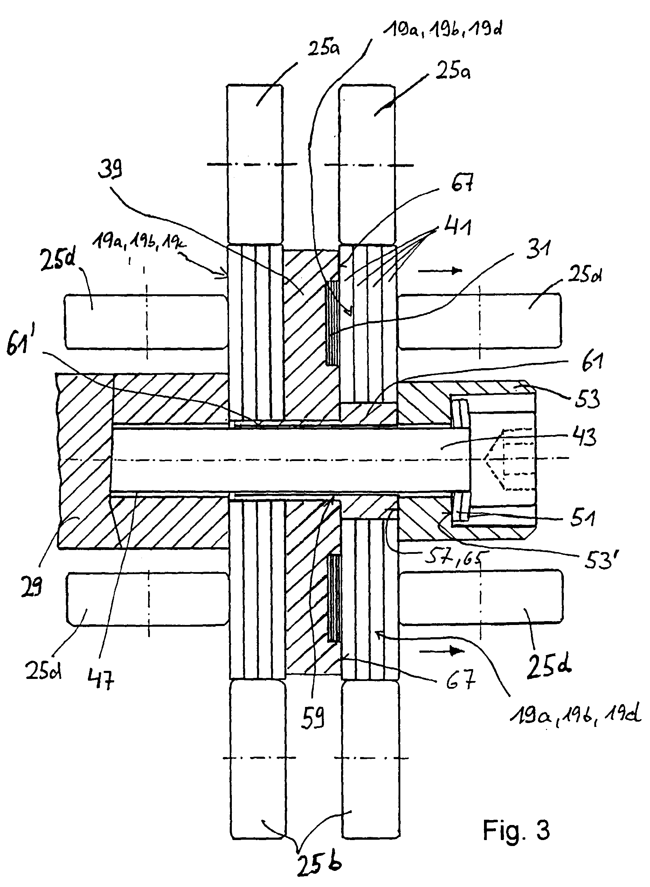

Nachfolgend wird anhand von Figur 3 ein abgewandeltes Ausführungsbeispiel gezeigt, in welchem eine Führungsschiene mit veränderlichem, auf den jeweiligen Abstand der Führungselemente selbst einstellendem Außenmaß nur in einer Ebene, nämlich hier in einer Hauptfunktionsebene, in welcher die Folienkräfte wirken, vorgesehen ist.

Anhand der vergrößerten Detaildarstellung gemäß Figur 3 ist gezeigt, daß die Führungsschiene 3 aus einem Führungsschienenkern 39 besteht, an welchen materialbahn- und schienenträgerseitig in Sandwichbauweise aufeinanderliegene Führungsschienenbänder 41 montiert sind.

Die Befestigung erfolgt mittel in Längsrichtung der Führungsschienen versetzt liegenden Schrauben 43, die durch eine Zentralbohrung durch die Führungsschiene und Führungsschienenbänder hindurch in einer entsprechenden Gewindebohrung 47 in den Schienenträger 29 eingedreht sind.

Die Klemmkräfte werden vom Kopf der Schraube 43 über Vorspannkräfte erzeugende unterlagscheiben-ähnliche Tellerfedern 51 auf eine Außenbuchse 53 oder einen zur Führungsschiene parallel verlaufenden durchgängigen äußeren Klemmkörper 53 übertragen. Die Klemmkräfte stützen sich dabei über die Tellerfedern 51 auf jeweils vorgesehene Schulteransätze 53' des äußeren Klemmträgers 53 ab.

Die Klemmkräfte wirken dann über die schienenseitige Anlagefläche 57 des äußeren Klemmträgers 53 auf die von den Schrauben 43 durchsetzten Innenbuchsen 59.

Die Innenbuchsen 59 weisen einen außenliegenden verdickten Klemmabschnitt 61 auf, der schienenträgerseitig dann in einen verjüngten Hülsenabschnitt 61' übergeht.

Die axiale Länge des gegenüber dem verdickten Klemmabschnitt 61 mit reduziertem Außendurchmesser versehenen Hülsenabschnittes 61' ist geringer als die Summe aus der Dicke des Führungsschienenkerns 39 und den trägerseitig liegenden Führungsschienenbänder 41, so daß beim Festdrehen der Schrauben 43 über den verdickten Klemmabschnitt 61 der Führungsschienenkern 39 und die schienenträgerseitig liegenden Führungsschienenbänder 41 mit dem Schienenträger 29 fest verschraubt werden, so daß die schienenträgerseitigen Schienenführungselemente 19c eine präzise Führungsaufgabe für die Kluppenwagen 5 übernehmen können.

Die axiale Länge des verdickten Klemmabschnittes 61 der Innenbuchse 59 ist nunmehr so bemessen, daß der Klemmabschnitt 61 zumindest geringfügig größer ist als die Dicke der materialbahnseitig liegenden Führungsschienenbänder 41. Der Unterschied der Dicke zwischen den materialbahnseitig liegenden Führungsschienenbändern 41 und der Axiallänge des verdickten Klemmabschnittes 61 begrenzt einen Hub H, um welchen die im gezeigten Ausführungsbeispiel materialbahnseitig liegenden und aus Führungsschienenbändern 41 gebildeten Schienenführungselemente 19d in ihrer Lage verstellbar sind.

Da die aus Führungsschienenbändern 41 gebildeten Schienenführungselemente 19d die Vorspann- und/oder Dämpfungseinrichtungen 31 überdecken, wird dadurch unter Anlage der Schienenführungselemente 19d an der angrenzenden Wand des Führungsschienenkerns 39 ein sogenannter innenseitiger Anschlag 67 und durch die Anlageseite 57 des äußeren Klemmträgers ein sogenannter äußerer Anschlag 65 erzeugt, der den Verstellbereich der Schienenführungselemente 19d begrenzt.

Schließlich ist aus Figur 3 auch ersichtlich, daß die Führungsschienenbänder 41 gleichzeitig die horizontal ausgerichteten Schienenführungsflächen 17c und 17d wie aber auch die nach oben wie unten weisenden weiteren Schienenführungsflächen 17a und 17b bilden. Dazu stehen die quer zur Materialbahn, also in Vertikalrichtung ausgerichteten und in Horizontalrichtung nebeneinander angeordneten Führungsschienenbänder 41 über die Oberseite des Führungsschienenkerns 39 über.

Wie anhand von Figur 1 und 2 bereits erläutert ist, werden dabei die materialbahnseitigen Führungsschienenelemente 17d durch die in den erwähnten Ausnahmevertiefungen 35 vorgesehenen Vorspann- und/oder Dämpfungseinrichtungen 31 in stetem Kontakt mit den zugeordneten Laufrollen 25d und darüber auch die außenseitigen Laufrollen 25c in stetem Kontakt mit den Führungsflächen gehalten.

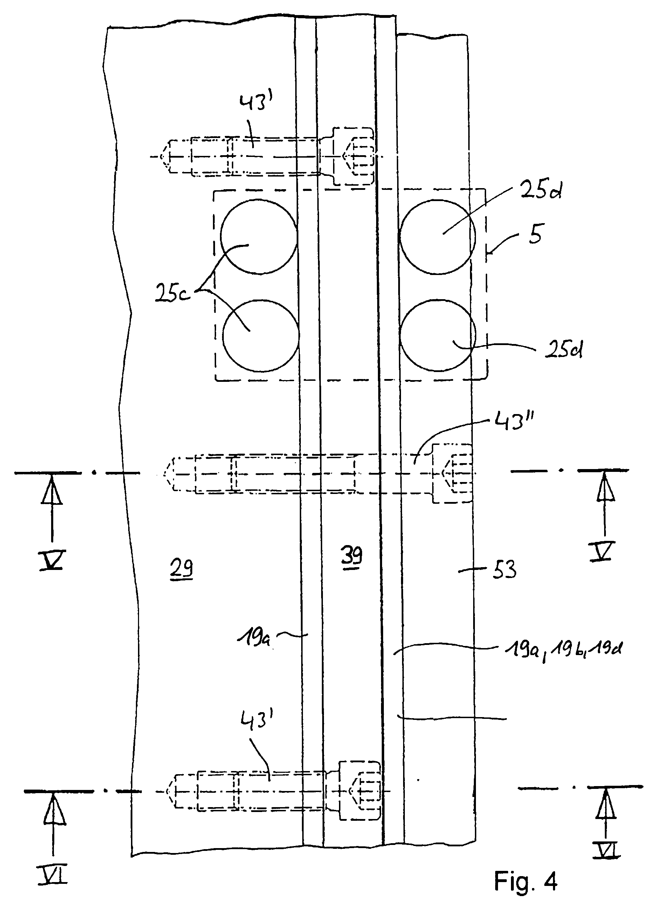

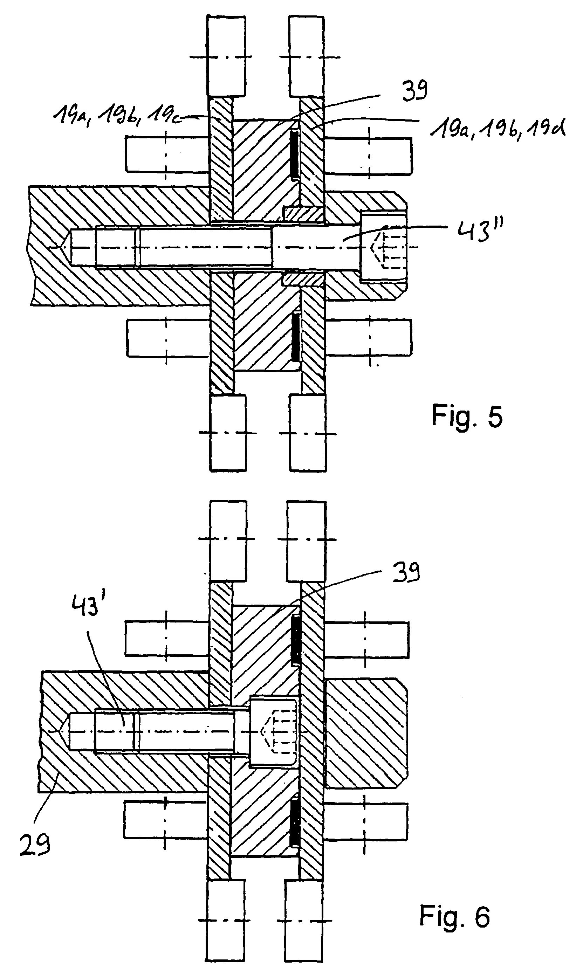

Anhand der Figuren 4 bis 6 ist eine Variation zu dem vorstehend genannten Ausführungsbeispiel erläutert, wobei gleiche Teile mit gleichen Bezugszeichen bezeichnet sind.

Auch hier ist die Führungsschiene sandwichartig aufgebaut, umfaßt allerdings neben dem Führungsschienenkern 39 jeweils nur ein auf die Materialbahn bezogenes außen- und innenseitiges Schienenführungselement 19c und 19d. Auch in diesem Ausführungsbeispiel ist nur das materialbahnseitig liegende Führungsschienenelement 19d selbsteinstellend und -federnd ausgebildet. Das begrenzt lageveränderliche Schienenführungselement 19d stellt dabei gleichzeitig das Schienenführungselement 19a bzw. 19b für die oberen bzw. unteren Laufrollen 25a, 25b dar. Ebenso erfüllt das Schienenführungselement 19c die Funktion des Schienenführungselementes 19a bzw. 19b.

Der Aufbau ist derart, daß längs der Führungsschiene 3 versetzt liegend über sogenannte innere Schrauben 43' der Führungsschienenkern 39 und darüber im sandwichartigen Klemmsitz das schienenträgerseite Führungsflächenelement 17c gegenüber dem Schienenträger 29 fest und präzise verspannt ist. Dazu sind entsprechende Bohrungen in dem Schienenführungselement 19c eingebracht.

Über in Längsrichtung der Führungsschiene 3 ebenfalls versetzt angeordnete sogenannte äußere Schrauben 43'' ist nunmehr ferner noch das materialbahnseitig liegende Schienenführungsschienenelement 19d am Führungsschienenträger 29 befestigt und abgestützt. Die entsprechenden äußeren Schrauben 43' durchsetzen dabei entsprechend fluchtende Bohrungen im Führungsschienenkern 39 und dem dahinter liegenden Schienenführungselement 19c. Diese äußeren Schrauben 43'' liegen dabei jeweils zu den inneren Schrauben 43' versetzt, und zwar bevorzugt in der Mitte zwischen zwei inneren Schrauben 43'.

Durch die vorgesehenen von den äußeren Schrauben 43' durchsetzten Innenbuchsen 59 wird ebenfalls wieder der Hub H für die selbstätig einstellbaren materialbahnseitigen Schienenführungselemente 19d begrenzt.

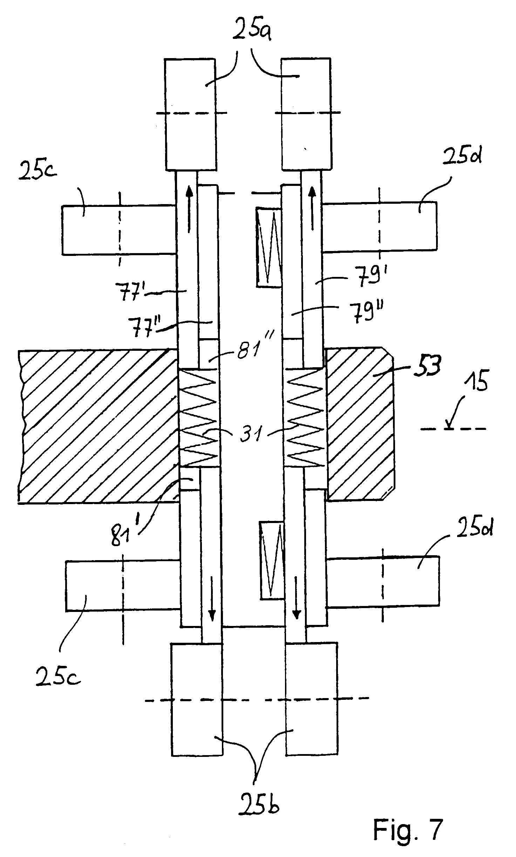

Anhand von Figur 7 ist nunmehr noch eine weitere Abwandlung gezeigt, bei welcher mittels weiterer Vorspann- und/oder Dämpfungseinrichtungen 31 auch die oben- und untenliegenden Schienenführungsflächen 17a und 17b an den entsprechenden Laufrollenabstand automatisch anpaßbar sind.

Bei diesem Ausführungsbeispiel sind die oberen und unteren Schienenführungselemente 19a und 19b zweigeteilt, und zwar in jeweils zwei durchgängig aufeinanderliegende Bandelemente 77' und 77'' bzw. 79' und 79''. Die Ausrichtung erfolgt quer zur Materialbahn 15. Die jeweils außenliegenden Bandelemente 77' bzw. 79' bilden gleichzeitig die Schienenführungselemente 19c und 19d für die um vertikale Achsen drehenden Laufrollen 25c und 25d.

Diese jeweils zusammenwirkenden Bandelemente weisen in Längsrichtung der Führungsschiene in Abständen jeweils versetzt zueinanderliegende Ausnehmungen 81' bzw. 81'' auf, in welchen in Vertikalrichtung wirkende Vorspann- und/oder Dämpfungseinrichtungen 31 vorgesehen sind.

Die Ausnehmungen 81' und 81'' sind in Vertikalrichtung (also in Wirkrichtung der Vorspanneinrichtung 31) so versetzt liegend angeordnet, daß durch die Vorspann- und/oder Dämpfungseinrichtung 31 jeweils das Führungsschienenband 77' bzw. 77'' unter Vorspannung gehalten wird, dessen Führungsfläche tatsächlich mit der ihr zugeordneten Laufrolle in Kontakt steht. Anordnung und Dimensionierung der Bandelemente 77', 77'' bzw. 79', 79'' und die zugehörigen Ausnehmungen 81' und 81'' sind derart gewählt, daß die gemeinsame Vorspann- und/oder Dämpfungseinrichtung 31 sich innenseitig jeweils an dem Bandelement abstützt und dadurch vorspannt, welches die überstehenden Schienenführungsflächen 17a bzw. 17b für die oben bzw. unten liegenden Laufrollen 25a, 25b bildet.

Durch die wechselweise Abstützung können dabei in Anpassung an den tatsächlichen Laufrollenabstand zwischen oberen und unteren Laufrollen die jeweils beiden zusammenwirkenden Führungsschienenbänder 77' bzw. 77'' und 79' und 79'' gegeneinander entgegen der Kraft der Vorspanneinrichtung 31 oder aber auch in Richtung der Kraft der Vorspanneinrichtung 31 selbsttätig so verstellt werden, daß die Schienenführungsflächen 17a und 17b in stetem Kontakt mit den Laufrollen 25a und 25b gehalten werden.

Auch in diesem Ausführungsbeispiel ist ferner eine in der Materialbahnebene wirkende selbsttätige Anpassung der materialbahnseitigen Schienenführungsflächen 17a bzw. Schienenführungselement 19d (welches in diesem Ausführungsbeispiel durch das Führungsschienenband 79' gebildet wird) vorgesehen, wie dies bei den vorausgegangenen Ausführungsbeispielen erläutert wurde. Trotz der Verschiebbarkeit der materialbahnseitig liegenden Führungsschienenbänder 79' bzw. 79'' läßt sich hierbei durch die in Figur 7 gezeigte Vorspanneinrichtung 31 eine zusätzlich selbsttätige Anpassung an die horizontalen Laufrollen 25c und 25d erzielen.

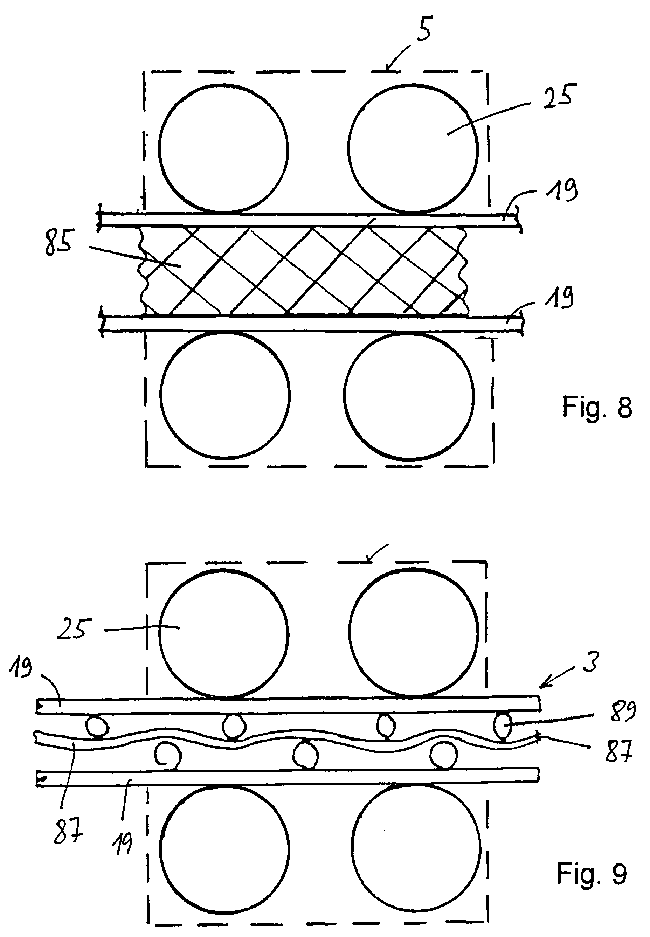

Anhand der Figuren 8 bis 9 ist nur schematisch gezeigt, wie die Vorspann- und/oder Dämpfungseinrichtungen 31 gebildet sein können.

In Figur 8 ist schematisch angedeutet, daß die gefederten, selbsttätig verstellbaren Schienenführungselemente 19 über ein dazwischen sitzendes und wirkendes Elastomer 85 vorgespannt und gedämpft gehalten werden.

Beim Ausführungsbeispiel gemäß Figur 9 wird eine zwischen den Schienenführungselementen 19 angeordnete Blattfeder 87 verwendet. Zusätzlich sind hier wechselweise zur Blattfeder sitzend Druckstücke 89 vorgesehen, die eine zusätzliche Dämpfungseigenschaft aufweisen können.

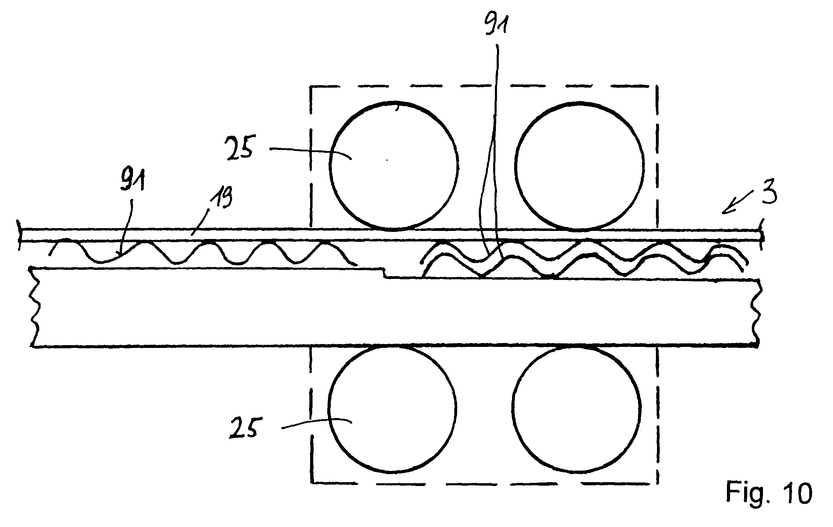

Beim Ausführungsbeispiel gemäß Figur 10 ist linksseitig eine einzelne Wellfeder 91 und rechtsliegend eine geschichtete, also doppelte Wellfeder 91 dargestellt. Weitere Abwandlungen sind aber ebenso möglich.

## Patentansprüche

1. Transportvorrichtung, insbesondere für eine bewegte Materialbahn, vorzugsweise eine Reckanlage, mit einer Führungsschienenanordnung (1) mit zumindest einer Führungsschiene (3), längs der Wagen (5) mittels Führungselementen (25) verfahrbar sind, wobei die Wagen (5) zumindest zwei mit gegensinniger Richtungskomponente ausgerichtete Führungselemente (25a, 25b; 25c, 25d) umfassen und unter Anlage ihrer Führungselemente (25a, 25b; 25c, 25d) an ihnen zugeordneten Schienenführungsflächen (17a, 17b; 17c, 17d) der Führungsschiene (3) lageveränderlich abgestützt verfahrbar sind und die Führungselemente (25a, 25b; 25c, 25d) der Wagen (5) die Führungsschiene (3) mit ihren Schienenführungsflächen (17a, 17b; 17c, 17d) über- oder umgreifen, **dadurch gekennzeichnet**, daß das Abstandsmaß zwischen den zumindest beiden Schienenführungsflachen (17a, 17b; 17c, 17d) begrenzt veränderlich ist, und dazu zumindest eine Vorspann- und/oder Feder- und/oder Dämpfungseinrichtung (31) vorgesehen ist, worüber zumindest eine der Schienenführungsflächen (17a, 17b; 17c, 17d) lageveränderlich gehalten und/oder gefedert und/oder gedämpft abgestützt ist.

2. Transportvorrichtung nach Anspruch 1, **dadurch gekennzeichnet**, daß die zumindest beiden lageveränderlichen Schienenführungsflächen (17a, 17b; 17c, 17d) an lageveränderlichen Schienenführungselementen (19a, 19b; 19c, 19d) ausgebildet sind, die mittels den Vorspann- und/oder Feder- und/oder Dämpfungseinrichtungen (31) in Richtung der damit zusammenwirkenden Schienenführungselemente (25a, 25b; 25c, 25d) vorgespannt und/oder gefedert und/oder gedämpft gehalten sind.

3. Transportvorrichtung nach Anspruch 1 oder 2, **dadurch gekennzeichnet**, daß das Abstandsmaß zwischen den jeweils zumindest beiden Schienenführungsflächen (17a, 17b; 17c, 17d) selbsttätig an das entsprechende Abstandsmaß der damit zusammenwirkenden Führungselemente (25a, 25b; 25c, 25d) der Wagen (5) anpaßbar ist.

4. Transportvorrichtung nach einem der Ansprüche 1 bis 3, **dadurch gekennzeichnet**, daß lediglich eine Schienenführungsfläche (17) bzw. ein Schienenführungselement (19) mittels einer Vorspann- und/oder Feder- und/oder Dämpfungseinrichtung (31) lageveränderlich angeordnet ist.

5. Transportvorrichtung nach Anspruch 4, **dadurch gekennzeichnet**, daß die der bewegten Materialbahn zugewandt oder abgewandt liegende Schienenführungsfläche (17) bzw. das entsprechende Schienenführungselement (19) lageveränderlich angeordnet ist.

6. Transportvorrichtung nach einem der Ansprüche 1 bis 3, **dadurch gekennzeichnet**, daß zumindest die nach oben oder unten weisende Schienenführungsfläche (17a, 17b) bzw. die zugehörigen Schienenführungselemente (19a, 19b) mittels einer Vorspann- und/oder Feder- und/oder Dämpfungseinrichtung (31) lageveränderlich gehalten sind.

7. Transportvorrichtung nach einem der Ansprüche 2 bis 6, **dadurch gekennzeichnet**, daß ein innerer Anschlag (67) vorgesehen ist, wodurch die maximale Verstellbewegung des Schienenführungselementes (19) entgegen der Kraft der Vorspann- und/oder Feder- und/oder Dämpfungseinrichtung (31) begrenzt ist.

8. Transportvorrichtung nach einem der Ansprüche 2 bis 7, **dadurch gekennzeichnet**, daß ein äußerer Anschlag (65) vorgesehen ist, wodurch die maximale Verstellbewegung des Schienenführungselementes (19) in Richtung der Kraft der Vorspann- und/oder Feder- und/oder Dämpfungseinrichtung (31) begrenzt ist.

9. Transportvorrichtung nach einem der Ansprüche 2 bis 8, **dadurch gekennzeichnet**, daß die gegenüberliegenden Schienenführungselemente (19a, 19b) in deren Langsrichtung und quer zur Schienenführungsfläche (17a, 17b) verlaufend geteilt und so angeordnet sind, daß sie unter Wirkung der Vorspann- und/oder Feder- und/oder Dämpfungseinrichtungen (31) gegensinnig und parallel zur Teilungsebene auf die jeweils ihnen zugeordneten gegenüberliegenden Führungselemente (25a, 25b) verstellbar sind.

10. Transportvorrichtung nach Anspruch 9, **dadurch gekennzeichnet**, daß die zumindest zweigeteilten Schienenführungselemente (19a, 19b) in Seitenansicht quer zur Teilungsebene zwischen den gegenüberliegenden Schienenführungsflächen (17a, 17b) teilweise in überlappender Anordnung eingebaut und im Überlappungsbereich zumindest relativ gegensinnig und parallel zur Teilungsebene durch die Vorspann- und/oder Feder- und/oder Dämpfungseinrichtungen (31) in Richtung ihrer zugeordneten Schienenführungsflächen (17a, 17b) zu auf die entsprechenden Führungselemente (25a, 25b) vorgespannt gehalten sind.

11. Transportvorrichtung nach einem der Ansprüche 1 bis 10, **dadurch gekennzeichnet**, daß die Vorspann- und/oder Feder- und/oder Dämpfungseinrichtungen (31) aus Blattfedern, Schraubenfedern, Tellerfedern, Biegeschenkelfedern, Torsionsfedern oder Wellfedern bestehen.

12. Transportvorrichtung nach einem der Ansprüche 1 bis 11, **dadurch gekennzeichnet**, daß neben den Vorspanneinrichtungen (31) separate Dämpfungselemente vorgesehen sind.

13. Transportvorrichtung nach einem der Ansprüche 1 bis 11, **dadurch gekennzeichnet**, daß kombinierte Vorspann- und Dämpfungseinrichtungen (31) zur Vermeidung möglicher Schwingungen vorgesehen sind.

14. Transportvorrichtung nach Anspruch 13, **dadurch gekennzeichnet** daß die kombinierten Vorspann- und Dämpfungseinrichtungen (31) aus Elastomerfedern oder -dämpfern, Gasdruckfedern oder -dämpfern, hydraulischen Federn oder Dämpfern bestehen.

15. Transportvorrichtung nach einem der Ansprüche 2 bis 14, **dadurch gekennzeichnet**, daß ein Schienenführungselement (19a bis 19d) jeweils mit zumindest zwei winklig zueinander ausgerichteten Schienenführungsflächen (17a, 17b; 17c, 17d) versehen ist, auf welchen unterschiedlich ausgerichtete Führungselemente (25a, 25c; 25b, 25d) abgestützt und längs verfahrbar gehalten sind.

16. Transportvorrichtung nach einem der Ansprüche 1 bis 15, **dadurch gekennzeichnet**, daß die mit zumindest einer lageveränderlichen Schienenführungsfläche (17a bis 17d) und/oder einem lageveränderlichen Schienenführungselement (19a bis 19d) ausgestattete Führungsschienenanordnung (1) aus einer einteiligen Führungsschiene (3), einer sogenannten Mono-Rail besteht.

17. Führungsschiene für eine Transportvorrichtung, insbesondere für eine bewegte Materialbahn nach einem der Ansprüche 1 bis 16, wobei die Führungsschiene (3) Schienenführungsflächen (17a, 17b; 17c, 17d) umfaßt und dabei zumindest zwei Schienenführungsflächen (17a, 17b; 17c, 17d) mit gegensinniger Richtungskomponente ausgerichtet sind, **dadurch gekennzeichnet**, daß das Abstandsmaß zwischen den zumindest beiden Schienenführungsflächen (17a, 17b; 17c, 17d) begrenzt veränderlich ist, und dazu zumindest eine Vorspann- und/oder Feder- und/oder Dämpfungseinrichtung (31) vorgesehen ist, worüber zumindest eine der Schienenführungsflachen (17a, 17b; 17c, 17d) lageveränderlich gehalten und/oder gefedert und/oder gedämpft abgestützt ist.

18. Führungsschiene nach Anspruch 17, **dadurch gekennzeichnet**, daß die zumindest beiden lageveränderlichen Schienenführungsflächen (17a, 17b; 17c, 17d) an lageveränderlichen Schienenführungselementen (19a, 19b; 19c, 19d) ausgebildet sind, die mittels den Vorspann- und/oder Feder- und/oder Dämpfungseinrichtungen (31) in Richtung der Schienenführungsflächen (17a, 17b; 17c, 17d) vorgespannt und/oder gefedert und/oder gedämpft gehalten sind.

19. Führungsschiene nach Anspruch 17 oder 18, **dadurch gekennzeichnet**, daß lediglich eine Schienenführungsfläche (17) bzw. ein Schienenführungselement (19) mittels einer Vorspann- und/oder Feder- und/oder Dämpfungseinrichtung (31) lageveränderlich angeordnet ist.

20. Führungsschiene nach einem der Ansprüche 17 bis 19, **dadurch gekennzeichnet**, daß zumindest die nach oben oder unten weisende Schienenführungsfläche (17a, 17b) bzw. die zugehörigen Schienenführungselemente (19a, 19b) mittels einer Vorspann- und/oder Feder- und/oder Dämpfungseinrichtung (31) lageveränderlich gehalten sind.

21. Führungsschiene nach einem der Ansprüche 18 bis 20, **dadurch gekennzeichnet**, daß ein innerer Anschlag (67) vorgesehen ist, wodurch die maximale Verstellbewegung des Schienenführungselementes (19) entgegen der Kraft der Vorspann- und/oder Feder- und/oder Dämpfungseinrichtung (31) begrenzt ist.

22. Führungsschiene nach einem der Ansprüche 18 bis 21, **dadurch gekennzeichnet**, daß ein äußerer Anschlag (65) vorgesehen ist, wodurch die maximale Verstellbewegung des Schienenführungselementes (19) in Richtung der Kraft der Vorspann- und/oder Feder- und/oder Dämpfungseinrichtung (31) begrenzt ist.

23. Führungsschiene nach einem der Ansprüche 18 bis 22, **dadurch gekennzeichnet**, daß die gegenüberliegenden Schienenführungselemente (19a, 19b) in deren Längsrichtung und quer zur Schienenführungsfläche (17a, 17b) verlaufend geteilt und so angeordnet sind, daß sie unter Wirkung der Vorspann- und/oder Feder- und/oder Dämpfungseinrichtungen (31) gegensinnig und parallel zur Teilungsebene verstellbar sind.

24. Führungsschiene nach Anspruch 23, **dadurch gekennzeichnet**, daß die zumindest zweigeteilten Schienenführungselemente (19a, 19b) in Seitenansicht quer zur Teilungsebene zwischen den gegenüberliegenden Schienenführungsflächen (17a, 17b) teilweise in überlappender Anordnung eingebaut und im Überlappungsbereich zumindest relativ gegensinnig und parallel zur Teilungsebene durch die Vorspann- und/oder Feder- und/oder Dämpfungseinrichtungen (31) in Richtung ihrer zugeordneten Schienenführungsflächen (17a, 17b) zu vorgespannt gehalten sind.

25. Führungsschiene nach einem der Ansprüche 17 bis 24, **dadurch gekennzeichnet**, daß die Vorspann- und/oder Feder- und/oder Dämpfungseinrichtungen (31) aus Blattfedern, Schraubenfedern, Tellerfedern, Biegeschenkelfedern, Torsionsfedern oder Wellfedern bestehen.

26. Führungsschiene nach einem der Ansprüche 17 bis 25, **dadurch gekennzeichnet**, daß neben den Vorspanneinrichtungen (31) separate Dämpfungselemente vorgesehen sind.

27. Führungsschiene nach einem der Ansprüche 17 bis 26, **dadurch gekennzeichnet**, daß kombinierte Vorspann- und Dämpfungseinrichtungen (31) zur Vermeidung möglicher Schwingungen vorgesehen sind.

28. Führungsschiene nach Anspruch 27, **dadurch gekennzeichnet**, daß die kombinierten Vorspann- und Dämpfungseinrichtungen (31) aus Elastomerfedern oder -dämpfern, Gasdruckfedern oder -dämpfern, hydraulischen Federn oder Dämpfern bestehen.

29. Führungsschiene nach einem der Ansprüche 18 bis 28, **dadurch gekennzeichnet**, daß ein Schienenführungselement (19a bis 19d) jeweils mit zumindest zwei winklig zueinander ausgerichteten Schienenführungsflächen (17a, 17b; 17c, 17d) versehen ist.

30. Führungsschiene nach einem der Ansprüche 17 bis 29, **dadurch gekennzeichnet**, daß die mit zumindest einer lageveränderlichen Schienenführungsfläche (17a bis 17d) und/oder einem lageveränderlichen Schienenführungselement (19a bis 19d) ausgestattete Führungsschienenanordnung (1) aus einer einteiligen Führungsschiene (3), einer sogenannten Mono-Rail besteht.

## Claims

1. Transport device, in particular for a moving material web, preferably a stretching system, having a guide rail arrangement (1) with at least one guide rail (3), along which carriages (5) can be moved by means of guide elements (25), the carriages (5) comprising at least two guide elements (25a, 25b; 25c, 25d) aligned with opposite direction components, and being movable in a manner supported by their guide elements (25a, 25b; 25c, 25d) bearing on rail guiding surfaces (17a, 17b; 17c, 17d), assigned to them, of the guide rail (3), with a variable position the guide elements (25a, 25b; 25c, 25d) of the carriages (5) engaging over or around the guide rail (3) with its rail guiding surfaces (17a, 17b; 17c, 17d), characterized in that the spacing distance between the at least two rail guiding surfaces (17a, 17b; 17c, 17d) is variable to a limited extent, and to this end at least one prestressing and or spring and/or damping device (31) is provided, via which at least one of the rail guiding surfaces (17a, 17b; 17c, 17d) is supported so that it is held and/or spring-loaded and/or damped with a variable position.

2. Transport device according to Claim 1, characterized in that the at least two variable-position rail guiding surfaces (17a, 17b; 17c, 17d) are formed on variable-position rail guide elements (19a, 19b; 19c, 19d), which are held, by means of the prestressing and/or spring and/or damping devices (31), in a prestressed and/or spring-loaded and/or damped manner in the direction of the rail guide elements (25a, 25b; 25c, 25d) interacting therewith.

3. Transport device according to Claim 1 or 2, characterized in that the spacing distance between the respectively at least two rail guiding surfaces (17a, 17b; 17c, 17d) can automatically be adapted to the corresponding spacing distance of the guide elements (25a, 25b; 25c, 25d), interacting therewith, of the carriages (5).

4. Transport device according to one of Claims 1 to 3, characterized in that only one rail guiding surface (17) or one rail guide element (19) is arranged so as to have a position which is variable by means of a pre-stressing and/or spring and/or damping device (31).

5. Transport device according to Claim 4, characterized in that the rail guiding surface (17), which is situated facing or remote from the moving material web, or the corresponding rail guide element (19) is arranged with a variable position.

6. Transport device according to one of Claims 1 to 3, characterized in that at least the rail guiding surface (17a, 17b) facing upward or downward, or the associated rail guide elements (19a, 19b), are held with a position which is variable by means of a prestressing and/or spring and/or damping device (31).

7. Transport device according to one of Claims 1 to 6, characterized in that an inner stop (67) is provided, by means of which the maximum adjusting movement of the rail guide element (19) counter to the force of the prestressing and/or spring and/or damping device (31) is limited.

8. Transport device according to one of Claims 2 to 7, characterized in that an outer stop (65) is provided, by means of which the maximum adjusting movement of the rail guide element (19) in the direction of the force of the prestressing and/or spring and/or damping device (31) is limited.

9. Transport device according to one of Claims 2 to 8, characterized in that the opposite rail guide elements (19a, 19b), are divided in their longitudinal direction and transversely with respect to the rail guiding surface (17a, 17b) and are arranged such that, under the action of the prestressing and/or spring and/or damping devices (31), they can be adjusted in opposite directions and parallel to the parting plane onto the opposite guide elements (25a, 25b) respectively assigned to them.

10. Transport device according to Claim 9, characterized in that the rail guide elements (19a, 19b), which are divided at least into two, are incorporated, in side view transversely to the parting plane between the opposite rail guiding surfaces (17a, 17b), in a partially overlapping arrangement, and, at least relatively in opposite directions and parallel to the parting plane, are held prestressed on the corresponding guide elements (25a, 25b), towards their associated rail guiding surfaces (17a, 17b), by the prestressing and/or spring and/or damping devices (31).

11. Transport device according to one of Claims 1 to 10, characterized in that the prestressing and/or spring and/or damping devices (31) comprise leaf springs, coil springs, disc springs, flexible limb springs, torsion springs or zig-zag springs.

12. Transport device according to one of Claims 1 to 11, characterized in that separate damping elements are provided as well as the prestressing devices (31).

13. Transport device according to one of Claims 1 to 11, characterized in that combined prestressing and damping devices (31) are provided in order to avoid possible vibrations.

14. Transport device according to Claim 13, characterized in that the combined prestressing and damping devices (31) comprise elastomer springs or dampers, gas pressure springs or dampers, hydraulic springs or dampers.

15. Transport device according to one of Claims 2 to 14, characterized in that a rail guide element (19a to 19d) is in each case provided with at least two rail guiding surfaces (17a, 17b; 17c, 17d) which are aligned at an angle to one another and on which differently aligned guide elements (25a, 25c; 25b, 25d) are supported and held so as to be movable longitudinally.

16. Transport device according to one of Claims 1 to 15, characterized in that the guide rail arrangement (1), which is equipped with at least one variable-position rail guiding surface (17a to 17d) and/or one variable-position rail guide element (19a to 19d), comprises a one-piece guide rail (3), a so-called monorail.

17. Guide rail for a transport device, in particular for a moving material web, according to one of Claims 1 to 16, the guide rail (3) comprising rail guiding surfaces (17a, 17b; 17c, 17d), and at least two of these rail guiding surfaces (17a, 17b; 17c, 17d) being aligned with opposite direction components, characterized in that the spacing distance between the at least two rail guiding surfaces (17a, 17b; 17c, 17d) is variable to a limited extent, and to this end at least one prestressing and/or spring and/or damping device is provided, via which at least one of the rail guiding surfaces (17a, 17b; 17c, 17d) is supported so that it is held and/or spring-loaded and/or damped with a variable position.

18. Guide rail according to Claim 17, characterized in that the at least two variable-position rail guiding surfaces (17a, 17b; 17c, 17d) are formed on variable-position rail guide elements (19a, 19b; 19c, 19d), which are held, by means of the prestressing and/or spring and/or damping devices (31), in a prestressed and/or spring-loaded and/or damped manner in the direction of the rail guiding surfaces (17a, 17b; 17c, 17d).

19. Guide rail according to Claim 17 or 18, characterized in that only one rail guiding surface (17) or one rail guide element (19) is arranged so as to have a position which is variable by means of a prestressing and/or spring and/or damping device (31).

20. Guide rail according to one of Claims 17 to 19, characterized in that at least the rail guiding surface (17a, 17b) facing upward or downward, or the associated rail guide elements (19a, 19b), are held with a position which is variable by means of a prestressing and/or spring and/or damping device (31).

21. Guide rail according to one of Claims 18 to 20, characterized in that an inner stop (67) is provided, by means of which the maximum adjusting movement of the rail guide element (19) counter to the force of the prestressing and/or spring and/or damping device (31) is limited.

22. Guide rail according to one of Claims 18 to 21, characterized in that an outer stop (65) is provided, by means of which the maximum adjusting movement of the rail guide element (19) in the direction of the force of the prestressing and/or spring and/or damping device (31) is limited.

23. Guide rail according to one of Claims 18 to 22, characterized in that the opposite rail guide elements (19a, 19b) are divided in their longitudinal direction and transversely with respect to the rail guiding surfaces (17a, 17b) and are arranged such that, under the action of the prestressing and/or spring and/or damping devices (31), they can be adjusted in opposite directions and parallel to the parting plane.

24. Guide rail according to Claim 23, characterized in that the rail guide elements (19a, 19b), which are divided at least into two, are incorporated, in side view transversely to the parting plane, between the opposite rail guiding surfaces (17a, 17b) in a partially overlapping arrangement, and, in the overlapping area, are held in a prestressed manner towards their associated rail guiding surfaces (17a, 17b), at least relatively in opposite directions and parallel to the parting plane, by the prestressing and/or spring and/or damping devices (31).

25. Guide rail according to one of Claims 17 to 24, characterized in that the prestressing and/or spring and/or damping devices (31) comprise leaf springs, coil springs, disc springs, flexible limb springs, torsion springs or zigzag springs.

26. Guide rail according to one of Claims 17 to 25, characterized in that separate damping elements are provided as well as the prestressing devices (31).

27. Guide rail according to one of Claims 17 to 26, characterized in that combined prestressing and damping devices (31) are provided in order to avoid possible vibrations.

28. Guide rail according to Claim 27, characterized in that the combined prestressing and damping devices (31) comprise elastomer springs or dampers, gas pressure springs or dampers, hydraulic springs or dampers.

29. Guide rail according to one of Claims 18 to 28, characterized in that a rail guide element (19a to 19d) is in each case provided with at least two rail guiding surfaces (17a, 17b; 17c, 17d) which are aligned at an angle to one another.

30. Guide rail according to one of Claims 17 to 29, characterized in that the guide rail arrangement (1), which is equipped with at least one variable-position rail guiding surface (17a to 17d) and/or one variable-position rail guide element (19a to 19d), comprises a one-piece guide rail (3), a so-called monorail.

## Revendications

1. Dispositif de transport, en particulier pour une nappe de tissu en déplacement, de préférence une installation d'étirage, comportant un agencement de rail de guidage (1) avec au moins un rail de guidage (3) le long duquel des chariots (5) sont déplaçables au moyen d'éléments de guidage (25), les chariots (5) comprenant au moins deux éléments de guidage (25a, 25b ; 25c, 25d) orientés avec des composantes de direction en sens inverse et, par mise en appui de leurs éléments de guidage (25a, 25b ; 25c, 25d) sur des surfaces de guidage de rails (17a, 17b ; 17c, 17d) associées à ceux-ci, du rail de guidage (3), lesdits chariots étant déplaçables, soutenus à position variable, et les éléments de guidage (25a, 25b ; 25c, 25d) des chariots (5) chevauchant ou entourant le rail de guidage (3) avec leurs surfaces de guidage de rail (17a, 17b ; 17c, 17d), caractérisé en ce que l'écartement entre les au moins deux surfaces de guidage de rail (17a, 17b ; 17c, 17d) est variable de manière limitée, et en ce qu'il est prévu en outre au moins un dispositif de précontrainte et/ou de ressort et/ou d'amortissement, par l'intermédiaire duquel au moins une des surfaces de guidage de rail (17a, 17b ; 17c, 17d) est maintenue et/ou soutenue de manière élastique et/ou amortie à position variable.

2. Dispositif de transport selon la revendication 1, caractérisé en ce que les au moins deux surfaces de guidage de rail (17a, 17b ; 17c, 17d) à position variable sont réalisées sur des éléments de guidage de rail (19, 19b; 19c, 19d) à position variable, qui sont maintenus en précontrainte et/ou soutenus par ressort et/ou amortis par les moyens de précontrainte et/ou les moyens de ressort et/ou les moyens d'amortissement (31) en direction des éléments de guidage de rail (25a, 25b ; 25c, 25d) coopérant avec ceux-ci.

3. Dispositif de transport selon l'une ou l'autre des revendications 1 et 2, caractérisé en ce que l'écartement entre les au moins deux surfaces de guidage de rail (17a, 17b ; 17c, 17d) est susceptible d'être automatiquement adapté à l'écartement correspondant des éléments de guidage (25a, 25b ; 25c, 25d), des chariots (5), coopérant avec celles-ci.

4. Dispositif de transport selon l'une quelconque des revendications 1 à 3, caractérisé en ce que seulement une surface de guidage de rail (17) ou un élément de guidage de rail (19) est agencé en position variable au moyen d'un dispositif de précontrainte et/ou de ressort et/ou d'amortissement.

5. Dispositif de transport selon la revendication 4, caractérisé en ce que la surface de guidage de rail (17) tournée vers ou détournée de la nappe de tissu mobile, ou l'élément de guidage de rail (19) correspondant, est agencée en position variable.

6. Dispositif de transport selon l'une quelconque des revendications 1 à 3, caractérisé en ce qu'au moins la surface de guidage de rail (17a, 17b) tournée vers le haut ou vers le bas, ou les éléments de guidage (19a, 19b) associés, est(sont) maintenue(maintenus) en position variable au moyen d'un dispositif de précontrainte et/ou de ressort et/ou d'amortissement (31).

7. Dispositif de transport selon l'une quelconque des revendications 2 à 6, caractérisé en ce qu'il est prévu une butée intérieure (67) permettant de limiter le mouvement de déplacement maximum de l'élément de guidage de rail (19) à l'encontre de la force du dispositif de précontrainte et/ou de ressort et/ou d'amortissement.

8. Dispositif de transport selon l'une quelconque des revendications 2 à 7, caractérisé en ce qu'il est prévu une butée extérieure (65) permettant de limiter le mouvement de déplacement maximum de l'élément de guidage de rail (19) en direction de la force du dispositif de précontrainte et/ou de ressort et/ou d'amortissement.

9. Dispositif de transport selon l'une quelconque des revendications 2 à 8, caractérisé en ce que les éléments de guidage de rail (19, 19b) situés l'un en face de l'autre sont subdivisés dans leur direction longitudinale et perpendiculairement à la surface de guidage de rail (17a, 17b) et sont agencés de telle sorte que sous l'effet des dispositifs de précontrainte et/ou de ressort et/ou d'amortissement (31), ils sont susceptibles de se déplacer en sens inverse et parallèlement au plan de subdivision, en direction des éléments de guidage (25a, 25b) se faisant face qui leur sont associés.

10. Dispositif de transport selon la revendication 9, caractérisé en ce que les éléments de guidage de rail (19a, 19b) au moins subdivisés en deux sont montés, en vue latérale perpendiculairement au plan de subdivision entre les surfaces de guidage de rail (17a, 17b), en partie suivant un agencement à chevauchement et, dans la région de chevauchement, ils sont maintenus en précontrainte au moins relativement en sens inverse et parallèlement au plan de subdivision par les dispositifs de précontrainte et/ou de ressort et/ou d'amortissement (31) en direction de leurs surfaces de guidage de rail (17a, 17b) associées, vers les éléments de guidage correspondants (25a, 25b).

11. Dispositif de transport selon l'une quelconque des revendications 1 à 10, caractérisé en ce que les dispositifs de précontrainte et/ou de ressort et/ou d'amortissement (31) sont constitués par des ressorts à lame, des ressorts hélicoïdaux, des rondelles-ressorts, des ressorts à branches de flexion, des ressorts à torsion, ou des rondelles ondulées.

12. Dispositif de transport selon l'une quelconque des revendications 1 à 10, caractérisé en ce qu'il est prévu des éléments d'amortissement séparés en plus des dispositifs de précontrainte (31).

13. Dispositif de transport selon l'une quelconque des revendications 1 à 11, caractérisé en ce que des dispositifs combinés de précontrainte et d'amortissement (31) sont prévus pour éviter des vibrations éventuelles.

14. Dispositif de transport selon la revendication 13, caractérisé en ce que les dispositifs combinés de précontrainte et d'amortissement (31) sont constitués par des ressorts ou amortisseurs en élastomère, des ressorts ou amortisseurs à pression de gaz, des ressorts ou amortisseurs hydrauliques.

15. Dispositif de transport selon l'une quelconque des revendications 2 à 14, caractérisé en ce que chaque élément de guidage de rail (19a à 19d) est pourvu d'au moins deux surfaces de guidage de rail (17a, 17b ; 17c, 17d) orientées sous un angle l'une par rapport à l'autre, sur lesquelles des éléments de guidage (25a, 25c ; 25b, 25d) à orientations différentes sont soutenus et maintenus en déplacement longitudinal.

16. Dispositif de transport selon l'une quelconque des revendications 1 à 15, caractérisé en ce que l'agencement (1) de rail de guidage équipé d'au moins une surface de guidage de rail (17a à 17d) à position variable et/ou d'un élément de guidage de rail à position variable (19a à 19d) est constitué par un rail de guidage (3) monobloc, appelé monorail.

17. Rail de guidage pour un dispositif de transport, en particulier pour une nappe de tissu en déplacement, selon l'une quelconque des revendications 1 à 16, le rail de guidage (3) comprenant des surfaces de guidage de rail (17a, 17b ; 17c, 17d), dont au moins deux surfaces de guidage de rail (17a, 17b ; 17c, 17d) sont orientées avec des composantes de direction en sens inverse, caractérisé en ce que l'écartement entre les au moins deux surfaces de guidage de rail (17a, 17b ; 17c, 17d) est variable de manière limitée, et en ce qu'il est prévu en outre au moins un dispositif de précontrainte et/ou de ressort et/ou d'amortissement, par l'intermédiaire duquel au moins une des surfaces de guidage de rail (17a, 17b ; 17c, 17d) est maintenue en position variable et/ou soutenue de manière élastique et/ou amortie.

18. Rail de guidage selon la revendication 17, caractérisé en ce que les au moins deux surfaces de guidage de rail (17a, 17b ; 17c, 17d) à position variable sont réalisées sur des éléments de guidage de rail (19a, 19b ; 19c, 19d) à position variable, qui sont maintenus avec précontrainte et/ou soutenus par ressort et/ou amortis par les moyens de précontrainte et/ou les moyens de ressort et/ou les moyens d'amortissement (31) en direction des surfaces de guidage de rail (17a, 17b ; 17c, 17d).

19. Rail de guidage selon l'une ou l'autre des revendications 17 et 18, caractérisé en ce que seulement une surface de guidage de rail (17) ou un élément de guidage de rail (19) est agencé en position variable au moyen d'un dispositif de précontrainte et/ou de ressort et/ou d'amortissement (31).

20. Rail de guidage selon l'une quelconque des revendications 17 à 19, caractérisé en ce qu'au moins la surface de guidage de rail (17a, 17b) tournée vers le haut ou vers le bas, ou les éléments de guidage de rail (19a, 19b) associés, est(sont) maintenue(maintenus) en position variable au moyen d'un dispositif de précontrainte et/ou de ressort et/ou d'amortissement (31).

21. Rail de guidage selon l'une quelconque des revendications 18 à 20, caractérisé en ce qu'il est prévu une butée intérieure (67) permettant de limiter le mouvement de déplacement maximum de l'élément de guidage de rail (19) à l'encontre de la force du dispositif de précontrainte et/ou de ressort et/ou d'amortissement (31).

22. Rail de guidage selon l'une quelconque des revendications 18 à 21, caractérisé en ce qu'il est prévu une butée extérieure (65) permettant de limiter le mouvement de déplacement maximum de l'élément de guidage de rail (19) en direction de la force du dispositif de précontrainte et/ou de ressort et/ou d'amortissement (31).

23. Rail de guidage selon l'une quelconque des revendications 18 à 22, caractérisé en ce que les éléments de guidage de rail (19a, 19b) situés l'un en face de l'autre sont subdivisés dans leur direction longitudinale et perpendiculairement à la surface de guidage de rail (17a, 17b) et sont agencés de telle sorte que sous l'effet des dispositifs de précontrainte et/ou de ressort et/ou d'amortissement (31), ils sont susceptibles de se déplacer en sens inverse et parallèlement au plan de subdivision.

24. Rail de guidage selon la revendication 23, caractérisé en ce que les éléments de guidage de rail (19a, 19b) au moins subdivisés en deux sont montés, en vue latérale perpendiculairement au plan de subdivision entre les surfaces de guidage de rail (17a, 17b) se faisant face, en partie en un agencement à chevauchement et, dans la région de chevauchement, ils sont maintenus avec précontrainte au moins relativement en sens inverse et parallèlement au plan de subdivision par les dispositifs de précontrainte et/ou de ressort et/ou d'amortissement (31) en direction de leurs surfaces de guidage de rail (17a, 17b) associées.

25. Rail de guidage selon l'une quelconque des revendications 17 à 24, caractérisé en ce que les dispositifs de précontrainte et/ou de ressort et/ou d'amortissement (31) sont constitués par des ressorts à lame, des ressorts hélicoïdaux, des rondelles-ressorts, des ressorts à branches de flexion, des ressorts à torsion, ou des rondelles ondulées.

26. Rail de guidage selon l'une quelconque des revendications 17 à 25, caractérisé en ce qu'il est prévu des éléments d'amortissement séparés en plus des dispositifs de précontrainte (31).

27. Rail de guidage selon l'une quelconque des revendications 17 à 25, caractérisé en ce que des dispositifs combinés de précontrainte et d'amortissement (31) sont prévus pour éviter des vibrations éventuelles.

28. Rail de guidage selon la revendication 27, caractérisé en ce que les dispositifs combinés de précontrainte et d'amortissement (31) sont constitués par des ressorts ou amortisseurs en élastomère, des ressorts ou amortisseurs à pression de gaz, des ressorts ou amortisseurs hydrauliques.

29. Rail de guidage selon l'une quelconque des revendications 18 à 28, caractérisé en ce que chaque élément de guidage de rail (19a à 19d) est pourvu d'au moins deux surfaces de guidage de rail (17a, 17b ; 17c, 17d) orientées sous un angle l'une par rapport à l'autre.

30. Rail de guidage selon l'une quelconque des revendications 17 à 29, caractérisé en ce que l'agencement (1) de rail de guidage équipé d'au moins une surface de guidage de rail (17a à 17d) à position variable et/ou d'un élément de guidage de rail à position variable (19a à 19d) est constitué par un rail de guidage (3) monobloc, appelé monorail.
